# EUROPÄISCHE PATENTANMELDUNG

(11) **EP 1 589 645 A2**
(43) Veröffentlichungstag der Anmeldung: **26.10.2005**
(21) Anmeldenummer: 05004715.8
(22) Anmeldetag: 03.03.2005
(51) Int. Cl.: H02M 1/00, H02M 7/219, H02M 5/45

(54) **Schaltung zum Umwandeln einer Wechselspannung in eine Gleichspannung**

(30) Priorität: 22.04.2004 DE 102004019589
(71) Anmelder: Patent-Treuhand-Gesellschaft für elektrische Glühlampen mbH, 81543 München (DE)
(72) Erfinder: Franck, Felix, Dr., 80333 München (DE); Niedermeier, Peter, 80995 München (DE)

(57) **Zusammenfassung**

Schaltung zum Umwandeln einer Wechselspannung in eine Gleichspannung, bei der ein Vollbrückengleichrichter durch zwei gesteuerte Schalter ersetzt ist. Es ist eine Drossel vorgeschaltet, so dass zu der Gleichrichtfunktion auch eine Leistungsfaktor-Korrektur ermöglicht ist. Die Schaltung weist am Ausgang eine Mittenspannung auf. Dadurch kann mit Hilfe von zwei weiteren Schaltern ein rechteckförmiger Laststrom erzeugt werden.

## Beschreibung

### Technisches Gebiet

Die Erfindung betrifft Schaltungen zum Umwandeln einer Wechselspannung in eine Gleichspannung. Eine vorteilhafte Ausführung der Erfindung beinhaltet eine Leistungs-Faktor-Korrektur, im folgenden PFC genannt.

### Stand der Technik

Eine Quelle liefert an eine Last eine Eingangs-Wechselspannung und einen Eingangs-Wechselstrom. Bei der Quelle handelt es sich beispielsweise um eine Netzspannungsquelle mit einer Frequenz von 50 Hz. Soll eine Gleichspannung bereitgestellt werden, so ist die Verwendung eines Vollbrückengleichrichters bestehend aus vier Gleichrichterdioden allgemein üblich. Eine derartige Schaltung liefert zunächst eine pulsierende Gleichspannung. Mit einem Glättungskondensator kann diese pulsierende Gleichspannung geglättet werden. Der Glättungskondensator bewirkt jedoch eine gepulste Stromaufnahme von der Wechselspannungsquelle. Dadurch ergibt sich ein Leistungsfaktor, der deutlich kleiner als 1 ist. Um dem abzuhelfen, insbesondere um einschlägige Vorschriften wie IEC 61000-3-2 einzuhalten, sind PFC-Schaltungen bekannt.

Übliche PFC Schaltungen sind z. B. Hochsetzer, Tiefsetzer, tiefsetzende Halb- und Vollbrücken sowie Cuk- , Sepic- und Zetawandler.

Der oben beschriebenen Vollbrückengleichrichter erzeugt eine Verlustleistung, die Abhängig ist von einer Flussspannung der Gleichrichterdioden und dem Eingangs-Wechselstrom. Da die Flussspannung der Dioden vom verwendeten Halbleitermaterial abhängt, muss die Verlustleistung des Vollbrückengleichrichters hingenommen werden. Dies ist besonders nachteilig bei Geräten die keinen Lüfter enthalten, da die Verlustleistung zu hohen Temperaturen der verwendeten Bauelemente führt. Typischerweise ohne Lüfter sind Betriebsgeräte für Lampen.

Ein weiterer Nachteil des beschriebenen Stands der Technik ist die Anzahl der Schalter, die nötig sind, um eine Gleichspannung zur Verfügung zu stellen, insbesondere dann, wenn eine PFC verlangt ist. Die Schalter werden im allgemeinen durch Halbleiterschalter realisiert, wobei auch Dioden als Schalter verstanden werden. Weiterhin sind Transistoren, wie z. B. MOSFET, Bipolartransistoren und IGBT, gesteuerte Schalter, die über ein Steuersignal ein- und ausgeschaltet werden können.

### Darstellung der Erfindung

Es ist Aufgabe der vorliegenden Erfindung, eine Schaltung zum Umwandeln einer Wechselspannung in eine Gleichspannung bereit zu stellen, die gegenüber einer Schaltung mit Vollbrückenwechselrichter eine reduzierte Verlustleistung aufweist.

Es ist eine weitere Aufgabe der Erfindung die o. g. Schaltung mit einer gegenüber dem Stand der Technik reduzierten Anzahl von Schaltern zu ermöglichen. Dies insbesondere auch, wenn eine PFC realisiert wird.

Diese Aufgabe wird durch folgende Grundausführung einer erfindungsgemäßen Schaltung gelöst: Der Vollbrückengleichrichter entfällt, dafür enthält die Schaltung eine Serienschaltung von mindestens zwei gesteuerten Schaltern. Der Glättungskondensator ist aufgeteilt in eine Serienschaltung von zwei Speicherkondensatoren. Die Quelle speist in die Verbindungspunkte der gesteuerten Schalter und Speicherkondensatoren über eine Induktivität ein. Die Serienschaltungen aus Schaltern und Speicherkondensatoren sind parallel geschaltet. An dieser Parallelschaltung kann die gewünschte Gleichspannung abgegriffen werden.

Gegenüber dem Vollbrückengleichrichter mit 4 Dioden weist die beschriebene Grundausführung einer erfindungsgemäßen Schaltung nur 2 gesteuerte Schalter auf. Damit ist Anzahl der Schalter gegenüber dem Stand der Technik reduziert.

Weiterhin ist die Verlustleistung gegenüber dem Stand der Technik durch zwei Verbesserungen reduziert. Der Eingangs-Wechselstrom durchfließt beim Vollbrückenwechselrichter 2 Schalter während er bei der Grundausführung der erfindungsgemäßen Schaltung nur einen Schalter durchfließt. Außerdem handelt es sich bei den Schaltern im Vollbrückenwechselrichter um Dioden während erfindungsgemäß gesteuerte Schalter verwendet werden, die weniger Verluste bewirken.

Die Schalter werden abwechselnd ein- und ausgeschaltet. Wird folgende Schaltersteuerung angewandt, so realisiert die erfindungsgemäße Schaltung eine PFC: Entsprechend einer Definition für die positive Stromrichtung des Eingangs-Wechselstroms bewirkt das Einschalten eines Schalters einen steigenden Eingangs-Wechselstroms, während das Einschalten des anderen Schalters einen fallenden Eingangs-Wechselstrom bewirkt. Nun wird der zuerst genannte Schalter eingeschaltet bis der Eingangs-Wechselstrom einen oberen Hysteresewert erreicht. Der zuerst genannte Schalter wird daraufhin ausgeschaltet und der andere Schalter eingeschaltet, bis der Eingangs-Wechselstrom einen unteren Hysteresewert erreicht. Der Eingangs-Wechselstrom liegt somit innerhalb eines Hysteresebandes, dessen Breite wählbar ist. Es ist zu beachten, dass ein schmales Hystereseband eine hohe Schaltfrequenz der Schalter bewirkt. Die Hysteresewerte sind proportional der Eingangs-Wechselspannung gewählt. Somit entspricht der zeitliche Verlauf des Hysteresebandes und somit im wesentlichen der zeitliche Verlauf des Eingangs-Wechselstroms dem zeitlichen Verlauf der Eingangs-Wechselspannung. Damit kann die erfindungsgemäße Schaltung im Idealfall den Wert 1 für den Leistungsfaktor erzielen. Die gegenüber einer Netzfrequenz hochfrequenten Schwankungen des Eingangs-Wechselstroms können durch bekannte Filterschaltungen am Eingang der Schaltung gedämpft werden.

An den Speicherkondensatoren liegt im eingeschwungenen Zustand jeweils eine Spannung an, die mindestens so groß ist wie der Spitzenwert der Eingangs-Wechselspannung. Zwischen den Speicherkondensatoren bildet sich ein stabilisierter Mittelpunkt mit einer Mittenspannung aus. Dieser Mittelpunkt kann vorteilhaft für einen Lastkreis genutzt werden, der eine rechteckförmige Wechselspannung benötigt. Der Lastkreis wird dazu mit einem Anschluss am Mittelpunkt angeschlossen, mit dem anderen Anschluss abwechselnd mit der Spannung des einen und des anderen Speicherkondensators beaufschlagt. Dieser Rechteckfrequenz, mit der zwischen den Speicherkondensatoren umgeschaltet wird, kann eine höherfrequentes Schalten überlagert sein. Mit Hilfe einer Induktivität im Lastkreis kann durch das höherfrequente Schalten ein Laststrom geregelt werden.

### Kurze Beschreibung der Zeichnungen

Im folgenden soll die Erfindung anhand von Ausführungsbeispielen unter Bezugnahme auf Zeichnungen näher erläutert werden. Es zeigen:
- Figur 1: ein Ausführungsbeispiel für eine erfindungsgemäße Schaltung,
- Figur 2: zeitlicher Verlauf von Eingangs-Wechselspannung, Eingangs-Wechselstrom und der Spannung zwischen den Schaltern,
- Figur 3: ein Ausführungsbeispiel für eine erfindungsgemäße Schaltung mit 3 State Realisierung,
- Figur 4: zeitlicher Verlauf von Eingangs-Wechselspannung, Eingangs-Wechselstrom und der Spannung zwischen den Schaltern bei 3 State Realisierung,
- Figur 5: ein Ausführungsbeispiel für eine erfindungsgemäße Schaltung mit einem Lastkreis, der eine Lampe enthält,
- Figur 6: ein Ausführungsbeispiel für eine erfindungsgemäße Schaltung mit einem Lastkreis mit 3 State Realisierung,
- Figur 7: Zeitlicher Verlauf von Spannung und Strom eines Lastkreises gemäß dem Ausführungsbeispiel in Figur 6.

Im folgenden werden Schalter durch den Buchstaben S, Dioden durch den Buchstaben D, Kondensatoren durch den Buchstaben C, Verbindungsknoten durch den Buchstaben N, Drosseln durch den Buchstaben L und Anschlüsse durch den Buchstaben J jeweils gefolgt von einer Zahl bezeichnet. Auch werden im folgenden für gleiche und gleichwirkende Elemente der verschiedenen Ausführungsbeispiele durchweg gleiche Bezugszeichen verwendet.

### Bevorzugte Ausführung der Erfindung

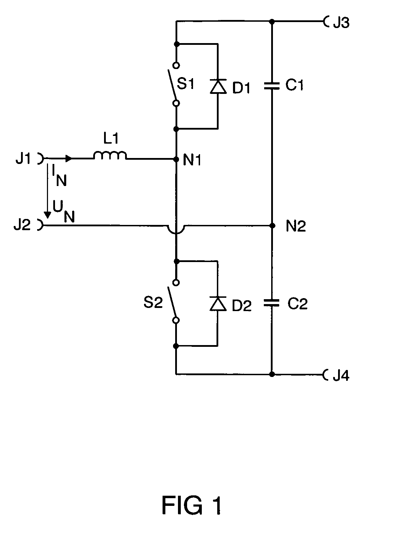

Figur 1 zeigt ein Ausführungsbeispiel für eine erfindungsgemäße Schaltung zum Umwandeln einer Wechselspannung UN in eine Gleichspannung. Die Schaltung weist folgende Merkmale auf:
- Eine erste und eine zweite Eingangsklemme J1, J2, an die eine Quelle anschließbar ist, die eine Eingangs-Wechselspannung UN und einen Eingangs-Wechselstrom IN abgeben kann,
- eine erste und eine zweite Ausgangsklemme J3, J4, an die eine Last anschließbar ist,
- einen ersten und einen zweiten gesteuerten Schalter S1, S2, die in Serie geschaltet zwischen die Ausgangsklemmen J3, J4 geschaltet sind und einen Schalter-Verbindungsknoten N1 bilden,
- einen ersten und einen zweiten Speicherkondensator C1, C2, die in Serie geschaltet zwischen die Ausgangsklemmen J3, J4 geschaltet sind und einen Kondensator-Verbindungsknoten N2 bilden
- die erste Eingangsklemme J1 ist über eine Drossel L1 mit dem Schalter-Verbindungsknoten N1 verbunden,
- die zweite Eingangsklemme J2 ist mit dem Kondensator-Verbindungsknoten N2 verbunden.

Parallel zu jedem Schalter S1 und S2 ist in Figur 1 jeweils eine allgemein bekannte Freilaufdiode D1 und D2 geschaltet. Diese Dioden reduzieren die Einschaltverluste und sind für die Ausführung der Erfindung entbehrlich. Werden für die Schalter MOSFETs verwendet, so sind die Freilaufdioden bereits prinzipbedingt als sog. Bodydiode im Schalter enthalten.

In Figur 1 ist eine Induktivität L1 nur zwischen der Eingangsklemme J1 und Schalter-Verbindungsknoten N1 geschaltet. Es kann aber auch eine weitere Induktivität zwischen der Eingangsklemme J2 und dem Kondensator-Verbindungsknoten N2 geschaltet sein. Für die Funktionsweise der Schaltung ist die Summe der Werte der beiden Induktivitäten von Bedeutung. Die Verwendung von zwei Induktivitäten symmetrisiert die Schaltung, was zu einer Verbesserung der Funkstörungen führt. Eine weitere Verbesserung bewirkt einen Kopplung der beiden Induktivitäten.

Eine nicht dargestellte Steuereinrichtung stellt Steuersignale bereit, die die Schalter abwechselnd ein- und ausschalten. Das Verhältnis von Ein- und Ausschaltzeit der Schalter definiert ein Tastverhältnis. Über das Tastverhältnis kann der Wert der Gleichspannung, die zwischen den Ausgangsklemmen J3 und J4 bereit gestellt wird, eingestellt werden. Bei einem aus dem Stand der Technik bekannten "Continuous Mode" und einem Tastverhältnis von 50 % liegt zwischen den Ausgangsklemmen J3 und J4 der vierfache Wert des Maximalwerts der Eingangs-Wechselspannung an.

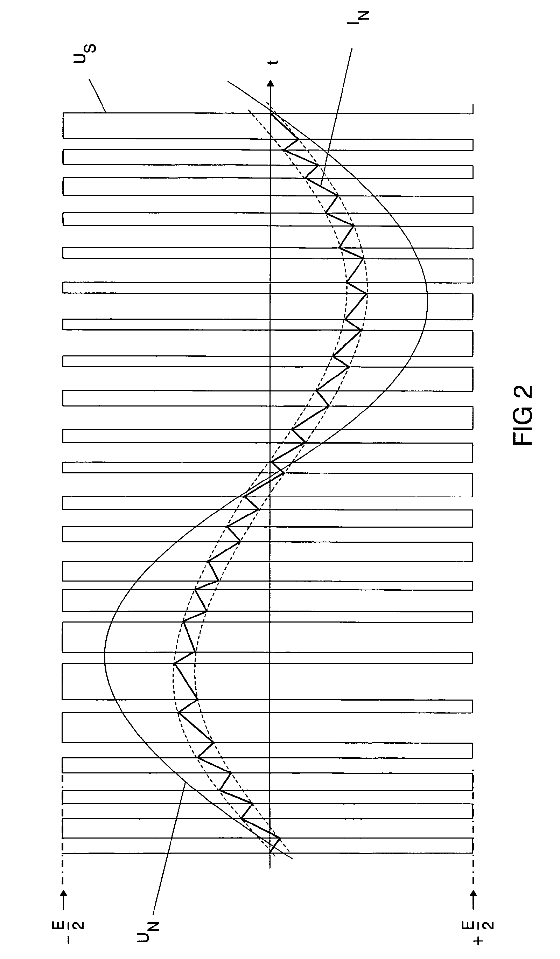

Die in Figur 1 dargestellte Schaltung ist auch in der Lage eine PFC zu bewerkstelligen. Dazu müssen die Schalter so geschaltet werden, wie es aus Figur 2 ersichtlich ist.

Die Abszisse in Figur 2 bildet eine Zeitachse. Als Eingangs-Wechselspannung ist eine sinusförmige Spannung UN eingezeichnet. Die Frequenz von UN beträgt z. B. 50 Hz. Der Schaltzustand der Schalter geht aus der Spannung US hervor, die die Spannung zwischen dem Schalter-Verbindungsknoten N1 und dem Kondensator-Verbindungsknoten N2 darstellt. Ist der Schalter S2 geschlossen liegt die Spannung US bei einem beliebig definierten Potenzial -E/2; ist der Schalter S1 geschlossen liegt die Spannung US bei einem beliebig definierten Potenzial +E/2.

Der Eingangs-Wechselstrom IN verläuft innerhalb eines gestrichelt dargestellten Hysteresebandes. Sobald der Eingangs-Wechselstrom IN an die Grenze des vorgegebenen Hysteresebandes stößt wird der jeweils eingeschaltete Schalter ausgeschaltet und der jeweils ausgeschaltete Schalter eingeschaltet. Der einzuschaltende Schalter kann auch verzögert eingeschaltet werden, da zunächst die zugehörige Freilaufdiode den Schalterstrom übernehmen kann.

Die Schaltfrequenz der Schalter ist in Figur 2 im Vergleich zur Frequenz der Eingangs-Wechselspannung UN sehr niedrig aufgezeichnet, um eine anschauliche Darstellung zu erhalten. Es wird deutlich, dass der zeitliche Verlauf des Eingangs-Wechselstroms IN im wesentlichen dem zeitlichen Verlauf der Eingangs-Wechselspannung UN folgt. Damit wird eine PFC erreicht.

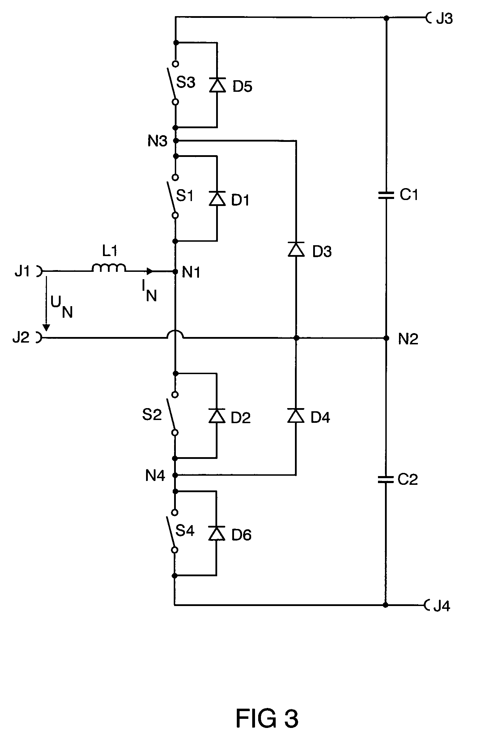

In Figur 3 ist eine gegenüber Figur 1 modifizierte Schaltung dargestellt. In Serie zum Schalter S1 ist ein Schalter S3 geschaltet und in Serie zum Schalter S2 ist ein Schalter S4 geschaltet. Wie zu den Schaltern S1 und S2 kann auch zu den Schaltern S3 und S4 eine Freilaufdiode D5 und D6 parallel geschaltet werden. Zwischen dem Schalter S1 und S3 liegt ein dritter Verbindungsknoten N3 und zwischen dem Schalter S2 und S4 liegt ein vierter Verbindungsknoten N4. Die Verbindungsknoten N3 und N4 sind jeweils über eine Klemmdiode D3, D4 mit dem Kondensator-Verbindungsknoten N2 verbunden. Durch Serienschaltung der Schalter entsteht eine Topologie die einen sog. Multi-Level oder Multi-State Betrieb ermöglicht. Diese Betriebart ist aus dem Stand der Technik bekannt und z. B. aus der folgenden Literatur zu entnehmen: T. Skvarenia: "The Power Electronics Handbook", CRC Press, Boca Raton, Florida, USA, 2001; Kapitel 6. Figur 3 bildet eine Anwendung dieser Betriebsart auf die erfindungsgemäße Schaltung aus Figur 1.

Durch den Multistate-Betrieb wird die Spannungsbelastung der Schalter reduziert. In Figur 3 ist 3-State Betrieb möglich, der die Spannungsbelastung der Schalter halbiert. Nach der genannten Literaturstelle ist auch der Betrieb für mehr als 3 "States" bekannt, der auch auf die vorliegende Erfindung anwendbar ist. Kennzeichnend für den 3-State Betrieb ist, dass es Zustände gibt, in denen S1 und S2 geschlossen sind und somit die Spannung zwischen N1 und N2 Null ist.

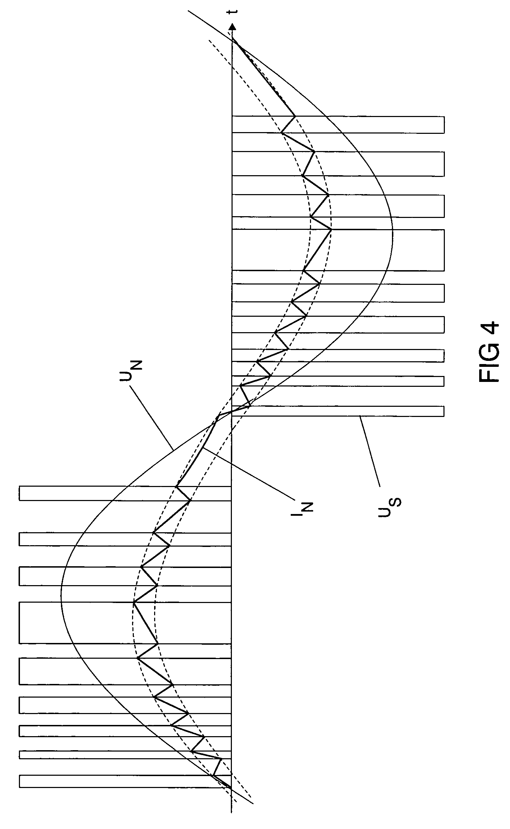

In Figur 4 ist analog zu Figur 2 der zeitliche Verlauf der Eingangs-Wechselspannung UN, des Eingangswechselstroms IN und der Spannung US zwischen N1 und N2 für den 3-State Betrieb dargestellt. Aus dem Verlauf ist die jeweils erforderliche Schalterstellung zu entnehmen. Der Verlauf von UN und IN deckt sich im wesentlichen mit dem Verlauf wie er in Figur 2 dargestellt ist. Unterschiedlich ist jedoch der Verlauf der Spannung US. Bei positiver Eingangs-Wechselspannung UN wird die Spannung US minimal Null. S1 kann dabei immer geschlossen bleiben und S2 und S3 abwechselnd schließen. Bei negativer Eingangs-Wechselspannung UN wird die Spannung US maximal Null. Dabei kann S2 immer geschlossen bleiben und S1 und S4 abwechselnd schließen.

Besonders vorteilhaft ist die Kombination einer erfindungsgemäßen Schaltung mit einer Last, die eine Mittenspannung benötigt, da das Potenzial am Kondensator-Verbindungsknoten N2 in der Mitte zwischen den Potenzialen der Ausgangsklemmen J3 und J4 liegt. Benötigt wird eine Mittenspannung falls eine Last eine rechteckförmige Spannung benötigt und diese schaltersparend mit nur 2 Schaltern erzeugt werden soll. Die Kombination einer erfindungsgemäßen Schaltung mit einer derartigen Last ist auch deshalb vorteilhaft, weil die erfindungsgemäße Schaltung die Eingangsspannung mindestens verdoppelt.

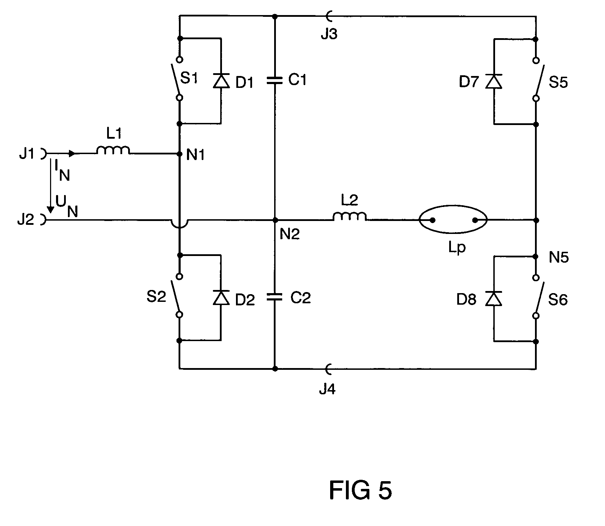

In Figur 5 ist ein Beispiel für einen derartige Schaltung gezeigt. Der Teil der Schaltung, der die Gleichspannung an J3 und J4 bereitstellt ist aus Figur 1 bekannt. Zwischen J3 und J4 ist die Serienschaltung von zwei Schaltern S5 und S6 geschaltet, wobei der Verbindungsknoten N5 gebildet wird. Zwischen N5 und N2 ist die Last geschaltet. Sie besteht im Beispiel aus einer Gasentladungslampe Lp und einer Lampendrossel L2.

Gasentladungslampen für Wechselstrom werden bevorzugt mit einem rechteckförmigen Wechselstrom betrieben. Im Stand der Technik werden dafür meist Vollbrücken eingesetzt. Die erfindungsmäßige Schaltung erlaubt wegen des Mittelpunktpotenzials an N2 den Einsatz einer Halbbrücke.

Die Schalter S5 und S6 werden mit einer gewünschten Rechteckfrequenz ein- und ausgeschaltet. Der Rechteckfrequenz kann eine höhere Frequenz überlagert sein, mit der ein gerade eingeschalteter Schalter zusätzlich getaktet wird. Diese Taktung führt zusammen mit der Lampendrossel L2 zu einer tiefsetzenden (Step-Down) Wirkung, wodurch der Lampenstrom geregelt werden kann.

Parallel zu S5 und S6 können Freilaufdioden D7 und D8 geschaltet sein. Parallel zu den Eingangsklemmen J1 und J2 kann ein Kondensator geschaltet sein, der gegenüber einer Netzfrequenz hochfrequente Ausgleichsströme ermöglicht.

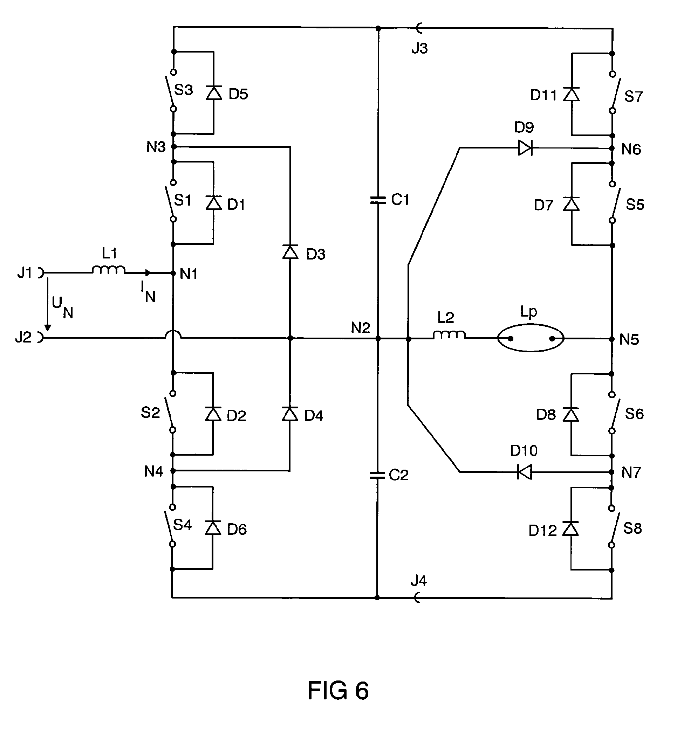

In Figur 6 ist dargestellt, wie nicht nur der Eingangsteil mit den Schaltern S1-4 als 3-State Stufe entsprechend Figur 3 ausgeführt ist, sondern auch der Ausgangsteil mit den Schaltern S5-8. Das Einfügen der Schalter S7 und S8 sowie der Klemmdioden D9 und D10 kann aus der oben zitierten Literatur zum Multi-State Betrieb hergeleitet werden.

Für den Betrieb einer Gasentladungslampe mit einer Rechteckspannung und PFC ist aus dem Stand der Technik eine Anordnung bekannt, die sich aus 4 Gleichrichterdioden einem Hochsetzer einem Tiefsetzer und einer Vollbrücke zusammen setzt. Dafür sind 10 Schalter nötig. Selbst die in Figur 6 dargestellte Variante der vorliegenden Erfindung weist mit 8 Schaltern eine reduzierte Schalterzahl gegenüber dem genannten Stand der Technik auf.

Auch der Ausgangsteil kann entsprechend der oben genannten Literaturstelle zum Multi-State Betrieb eine höhere Zahl an "States" als 3 aufweisen.

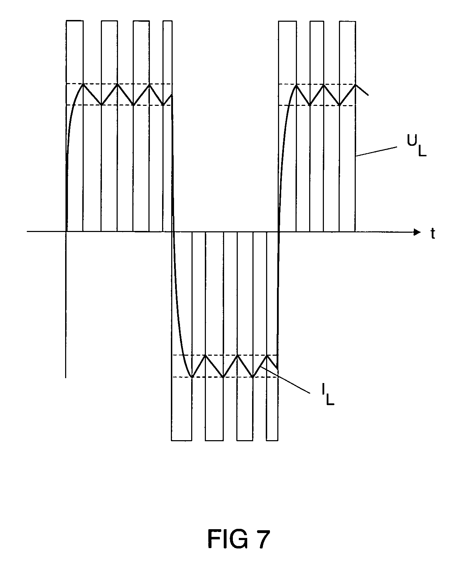

In Figur 7 sind im Gegensatz zu den zeitlichen Verläufen aus den Figuren 2 und 4 keine eingangsseitigen, sondern ausgangsseitige Verläufe dargestellt. Gezeigt sind Verläufe zur Schaltung aus Figur 6. UL zeigt den Spannungsverlauf zwischen den Verbindungsknoten N5 und N2. IL zeigt den Verlauf des Laststroms IL durch die Lampe.

Deutlich ist zu erkennen, wie der niederfrequenten Rechteckspannung eine hochfrequente Tastung überlagert ist. Den 3-State Betrieb erkennt man daran, dass die Spannung UL nicht zwischen maximaler und minimaler Spannung schwingt, sondern zwischen maximaler Spannung und Mittenspannung (Abszisse) oder zwischen minimaler Spannung und Mittenspannung (Abszisse) schwingt. Die Mittenspannung bildet somit den dritten "State".

Eine nicht dargestellte Steuervorrichtung liefet die Steuersignale für die Schalter S5-S8. Sie werden so geschaltet, dass der Laststrom IL im vorgegebenen, gestrichelt gezeichneten Hystereseband verläuft.

## Patentansprüche

1. Schaltung zum Umwandeln einer Wechselspannung in eine Gleichspannung mit folgenden Merkmalen:
• eine erste (J1) und eine zweite (J2) Eingangsklemme, an die eine Quelle anschließbar ist, die eine Eingangs-Wechselspannung (UN) und einen Eingangs-Wechselstrom (IN) abgeben kann,
• eine erste (J3) und eine zweite (J4) Ausgangsklemme, an die eine Last anschließbar ist,
**gekennzeichnet durch** folgende Merkmale:
• ein erster (S1) und ein zweiter (S2) gesteuerter Schalter, die in Serie geschaltet zwischen die Ausgangsklemmen (J3, J4) geschaltet sind und einen Schalter-Verbindungsknoten (N1) bilden,
• ein erster (C1) und ein zweiter (C2) Speicherkondensator, die in Serie geschaltet zwischen die Ausgangsklemmen (J3, J4) geschaltet sind und einen Kondensator-Verbindungsknoten (N2) bilden
• die erste Eingangsklemme (J1) ist über eine Drossel (L1) mit dem Schalter-Verbindungsknoten (N1) verbunden,
• die zweite Eingangsklemme (J2) ist mit dem Kondensator-Verbindungsknoten (N2) verbunden.

2. Schaltung nach Anspruch 1, **dadurch gekennzeichnet,**
**dass** parallel zum ersten Schalter (S1) eine erste Freilaufdiode (D1) und parallel zum zweiten Schalter (S2) eine zweite Freilaufdiode (D2) geschaltet ist.

3. Schaltung nach Anspruch 1 oder 2, **dadurch gekennzeichnet,**
**dass** die zweite Eingangsklemme (J2) mit dem Kondensator-Verbindungsknoten (N2) über eine zweite Drossel verbunden ist.

4. Schaltung nach einem der vorigen Ansprüche, **dadurch gekennzeichnet, dass**
die Schaltung eine Steuereinrichtung umfasst, die Steuersignale für die Schalter (S1, S2) bereitstellt,
wobei die Steuersignale ein abwechselndes Ein- und Ausschalten der beiden Schalter (S1, S2) bewirken
und ein Tastverhältnis zwischen der Ein- und Ausschaltdauer der Schalter (S1, S2) so gewählt ist, dass der zeitliche Verlauf des Eingangs-Wechselstroms (IN) im wesentlichen dem zeitlichen Verlauf der Eingangs-Wechselspannung (UN) folgt.

5. Schaltung nach einem der vorigen Ansprüche, **gekennzeichnet durch** folgende Merkmale:
• zum ersten Schalter (S1) ist ein dritter Schalter (S3) in Serie geschaltet und bildet mit diesem einen dritten Verbindungsknoten (N3),
• zum zweiten Schalter (S2) ist ein vierter Schalter (S4) in Serie geschaltet und bildet mit diesem einen vierten Verbindungsknoten (N4),
• eine erste Klemmdiode (D3) ist zwischen den Kondensator-Verbindungsknoten (N2) und den dritten Verbindungsknoten (N3) geschaltet,
• eine zweite Klemmdiode (D4) ist zwischen den Kondensator-Verbindungsknoten (N2) und den vierten Verbindungsknoten (N4) geschaltet.

6. Schaltung nach Anspruch 5, **dadurch gekennzeichnet,**
**dass** parallel zum dritten Schalter (S3) eine dritte Freilaufdiode (D5) und parallel zum vierten Schalter (S4) eine vierte Freilaufdiode (D6) geschaltet ist.

7. Schaltung nach einem der vorigen Ansprüche, **gekennzeichnet durch** folgende Merkmale:
• ein fünfter (S5) und ein sechster (S6) Schalter sind in Serie zwischen die Ausgangsklemmen (J3, J4) geschaltet und bilden einen fünften Verbindungsknoten (N5),
• eine Serienschaltung aus einer Gasentladungslampe (Lp) und einer Lampendrossel (L2) ist zwischen den Kondensator-Verbindungsknoten (N2) und den fünften Verbindungsknoten (N5) geschaltet.

8. Schaltung nach Anspruch 7, **dadurch gekennzeichnet, dass** parallel zum fünften Schalter (S5) eine fünfte Freilaufdiode (D7) und parallel zum sechsten Schalter (S6) eine sechste Freilaufdiode (D8) geschaltet ist.

9. Schaltung nach Anspruch 7 oder 8, **gekennzeichnet durch** folgende Merkmale:
• zum fünften Schalter (S5) ist ein siebter Schalter (S7) in Serie geschaltet und bildet mit diesem einen sechsten Verbindungsknoten (N6)
• zum sechsten Schalter (S6) ist ein achter Schalter (S8) in Serie geschaltet und bildet mit diesem einen siebten Verbindungsknoten (N7)
• eine dritte Klemmdiode (D9) ist zwischen den Kondensator-Verbindungsknoten (N2) und den sechsten Verbindungsknoten (N6) geschaltet
• eine vierte Klemmdiode (D10) ist zwischen den Kondensator-Verbindungsknoten (N2) und den siebten Verbindungsknoten (N7) geschaltet.

10. Schaltung nach Anspruch 9, **dadurch gekennzeichnet,**
**dass** parallel zum siebten Schalter (S7) eine siebte Freilaufdiode (D11) und parallel zum achten Schalter (S8) eine achte Freilaufdiode (D 12) geschaltet ist.
